# EUROPEAN PATENT APPLICATION

(11) **EP 1 729 511 A2**
(43) Date of publication of application: **06.12.2006**
(21) Application number: 06252861.7
(22) Date of filing: 02.06.2006
(51) Int. Cl.: H04N 5/44

(54) **Video display apparatus and method for storing and reproducing broadcasting program**

(30) Priority: 03.06.2005 KR 20050047684
(71) Applicant: LG Electronics Inc., Youngdungpo-Gu Seoul (KR)
(72) Inventor: Choi, Eun Hae, Gangreung-si Gangwon-do (KR)
(74) Representative: Neobard, William John

(57) **Abstract**

Provided is a method for reproducing a broadcasting program. According to the method, a channel for the broadcasting program is set, and the broadcasting program is stored in a storage medium. After that, when switching to the set channel is performed, the stored broadcasting program is reproduced.

## Description

The present invention relates to a method for reproducing a broadcasting program and to a video display apparatus.

Recently, as a digital television standard called advanced television (ATV) is adopted in the United States, and a digital television standard such as high definition (HD)-digital video narrow-band emission (DIVINE), SPECTRE, DIAMOND, etc. are adopted in Europe, a variety of researches on digital television technologies are in active progress.

In digital television broadcasting, a data stream may be transmitted together with video and audio streams. The data stream may contain java-based data information such as hyper text markup language (HTML) of advance television enhancement forum (ATVEF), and XLET of Digital TV Application Software Environment (DASE). The data stream may include electronic program guide (EPG) data, which consists of program guide information regarding broadcasting programs.

The EPG information may provide guidance regarding broadcasting programs to a user and may be used for various purposes.

For example, the EPG information may be used for detecting an error in reservation recording conditions input by a user using the EPG, and automatically changing the reservation recording conditions according to the EPG when an error is detected in the reservation recording conditions. Accordingly, the EPG information may automatically correct a reservation error caused by a user's mistake or change of broadcasting programs to allow a program a user desires to record to be normally recorded.

However, related art reservation recording merely performs reservation recording according to a user's reservation recording command. Therefore, when a user performs the reservation recording on a plurality of programs and intends to reproduce a predetermined program, a user has had inconvenience of exploring a relevant program contained in a recording list and reproducing the explored program.

Also, when the predetermined program is a program such as a serial drama consisting of a plurality of episodes broadcasted by one episode every predetermined period, a user should explore and reproduce one of episodes, and then explore and reproduce another episode. Accordingly, use inconvenience is increased even more.

Therefore, development of a technology that allows a user to selectively reproduce some of a plurality of reservation-recorded programs with only simple manipulation is highly required.

Also, a technology that allows a user to reproduce some episodes of a program with only simple manipulation even when the program consisting of a plurality of episodes broadcasted by one episode every predetermined period is reservation-recorded, is highly required.

Accordingly, the present invention is directed to a video display apparatus and a method for storing and reproducing a broadcasting program that substantially obviate one or more problems due to limitations and disadvantages of the related art.

An object of the present invention is to provide method and apparatus for recording and reproducing a program, capable of selectively reproducing a plurality of reservation-recorded programs with simply manipulation such as channel switching.

Another object of the present invention is to provide method and apparatus for recording and reproducing a program, capable of giving different virtual channels to programs consisting of a plurality of episodes broadcasted by one episode every predetermined period, and reproducing a recorded program through a corresponding virtual channel by only requesting switching to the relevant virtual channel of the plurality of virtual channels.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, there is provided a method for reproducing a broadcasting program, the method including: setting a channel for a broadcasting program; storing the broadcasting program in a storage medium; and when switching to the set channel is performed, reproducing the stored broadcasting program.

In another aspect of the present invention, there is provided a method for storing a broadcasting program, the method including: setting recording of the broadcasting program consisting of a plurality of episodes broadcasted in a series; setting identification information of the broadcasting program; and storing the broadcasting program in a folder of a storage medium with reference to the identification information.

In a further another aspect of the present invention, there is provided a video display apparatus including: a tuner for receiving a broadcasting program; a broadcasting signal processor for recovering the broadcasting program and separating the recovered broadcasting program into video and audio streams; video and audio processors for processing the video and audio streams into video and audio signals, respectively; a display unit for displaying the video signal; a user interface for receiving a user's command; and a controller for recording the broadcasting program in a recording medium according to a signal from the user interface, setting a channel for the broadcasting program, and when switching to the set channel is performed, reproducing the broadcasting program associated with the set channel.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of a video display apparatus embodying the present invention;

Fig. 2 is a view illustrating a program reservation table according to an embodiment of the present invention;

Fig. 3 is a program recording table according to an embodiment of the present invention; and

Figs. 4 to 7 are flowcharts illustrating a method for recording and reproducing a program according to an embodiment of the present invention.

Reference will now be made in detail to the preferred embodiments of the present invention, examples of which are illustrated in the accompanying drawings.

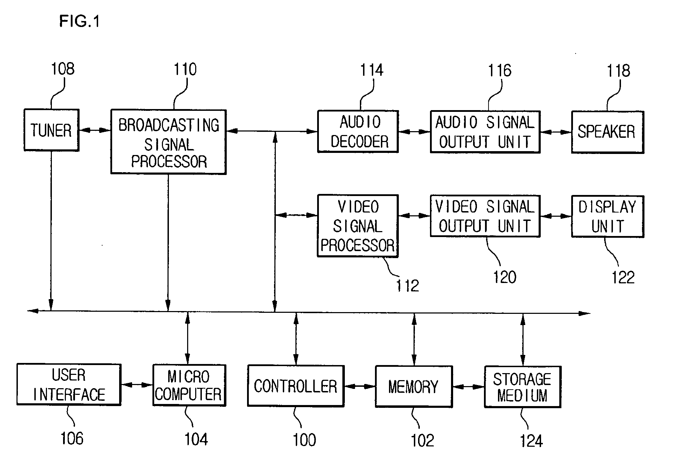

Referring to Fig. 1, a controller 100 controls overall operations of the video display apparatus, and records and reproduces a broadcasting program.

A memory unit 102 stores a variety of information including a processing program of the controller 100, and particularly stores a program reservation table and a program recording table according to a preferred embodiment of the present invention.

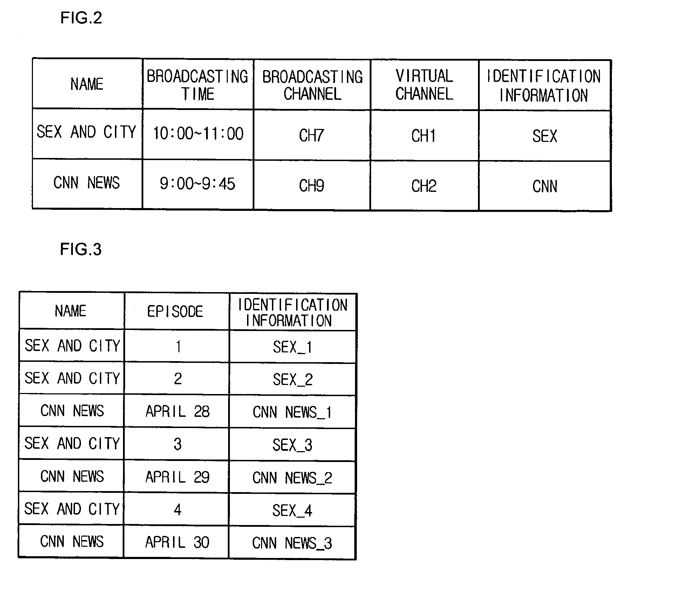

The program reservation table contains program reservation information, which includes a broadcasting time, a broadcasting channel, a virtual channel, and program identification information of a program a user has selected for reservation recording as illustrated in Fig. 2. For example, a broadcasting time of a program titled *"Sex and the City"* is 10:00-11:00, a broadcasting channel thereof is CH7, a virtual channel thereof is CH1, and program identification information thereof is "SEX". A broadcasting time for a program titled "CNN new" is 9:00 - 9:45, a broadcasting channel thereof is CH9, and a virtual channel thereof is CH2, and program identification information thereof is "CNNNEWS".

The broadcasting time and the broadcasting channel are directly input by a user or automatically input when a program is selected through a program guide. The virtual channel is directly input by a user with consideration of a user's preference, or an invalid channel may be arbitrarily set for a virtual channel by the controller 100. Here, the virtual channel is intended for reproducing a recorded program.

The program identification information may be arbitrarily set by the controller 100. The program identification information is used as a folder name or a directly name of a storage medium 124. That is, the controller 100 creates a folder or a directory associated with identification information of a program at the storage medium 124 when reservation information of the program is registered.

Here, though the memory unit 102 and the storage medium 124 are shown to be separately provided, they may perform functions of the memory unit 102 and the storage medium 124 in a single storage space. Also, the video display apparatus may be provided with built-in memory unit 102 and storage medium 124. Otherwise, the memory unit 102 and the storage medium 124 may be provided as external devices that can be electrically connected to the video display apparatus. In this case, the video display apparatus has a connection terminal for connecting to an external storage medium.

The program recoding table stores program recording information, which includes episode No. and identification information of a recorded program as illustrated in Fig. 3. For example, episode 1 of a program "sex and city" gives, for identification information of its recorded program, "SEX_1" where identification information "SEX" of the program *"Sex and The City'* and episode No. information "1" representing a first recorded program are combined.

The identification information of the recorded program may be arbitrarily determined by the controller 100, and the identification information of the recorded program is used as a filename stored in the storage medium 124.
That is, the controller 100 stores the program in the storage medium 124 using the identification information of the recorded program for a filename.

The microcomputer 104 provides various commands or information from a user through a user interface 106 to the controller 100.

The user interface 106 receives various commands or information from a user using a keypad or a remote controller, and provides the received commands or information to the microcomputer 104.

A tuner 108 selects broadcasting signals of a predetermined channel from broadcasting signals, and provides the selected broadcasting signals to a broadcasting signal processor 110 under control of the controller 100. The broadcasting signal processor 110 includes a transport stream (TS) decoder and recovers the broadcasting signals to a TS, and separates the TS into audio streams, video streams, and data streams.

The video stream is processed by a video signal processor 112 into signals that can be output, and displayed by a display unit 122 via a video signal output unit 120. Also, the video signal output unit 120 receives on-screen-display (OSD) data and outputs the ODS data to the display unit 122 under control of the controller 100.

Also, the broadcasting signal processor 110 provides the audio stream to an audio decoder 114, which recovers the audio stream to audio data and outputs the recovered audio data to a speaker 118 via an audio signal output unit 116. Here, the speaker 118 may be integrally formed with the video display apparatus. Otherwise, the speaker 118 may be provided as an external device that can be electrically connected to the video display apparatus.

The broadcasting signal processor 110 provides the data stream to the controller 100. The data stream contains EPG data used for forming a program guide.

The storage medium 124 is a large-capacity storage medium, and stores video and audio streams of a program under control of the controller 100. Particularly, the storage medium 124 provides a folder storing identification information of a program. A program containing corresponding identification information is stored in a corresponding folder, and a filename of the program is determined by identification information of the recorded program.

A video display apparatus according to a preferred embodiment of the present invention will be described in detail below.

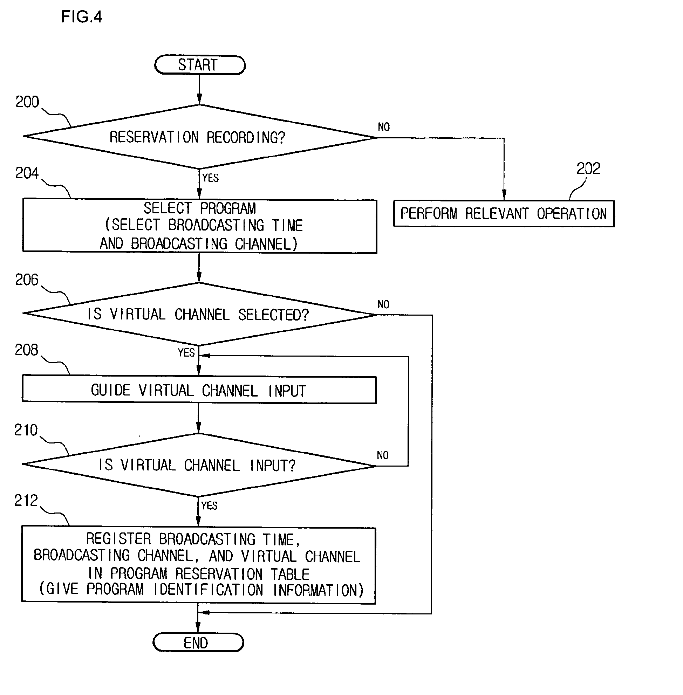

Referring to Fig. 4, when a user requests reservation recording through a user interface 106 (operation 200), a controller 100 guides a user so that a user may select a program of a program guide or a broadcasting time and a broadcasting channel.

A user selects a program or a broadcasting time and a broadcasting channel according to the guidance of the controller 100. After that, the controller 100 questions a user regarding setting of a virtual channel to be used when reproducing a program. The questioning may be displayed through on-screen-display (OSD).

When a user requests the setting of the virtual channel through the user interface 106 according to the questioning, the controller 100 guides inputting of the virtual channel (operations 206 and 208).

A user inputs a desired virtual channel through the user interface 106 according to the guidance, and the controller 100 registers the input virtual channel, broadcasting time, broadcasting channel, and virtual channel as program reservation information in a program reservation table. Also, the controller 100 gives program identification information corresponding to program reservation information.

That is, the broadcasting time, broadcasting channel, virtual channel, and program identification information regarding a program for which reservation recording has been requested by a user, are registered as the program reservation information in the program reservation table. Also, the controller 100 automatically creates a folder or a directory corresponding to the identification information on the storage medium 124.

Though only the setting of the virtual channel according to a user's request is descried in the above embodiment, the controller 100 may guide a user so that a user inputs another channel when a virtual channel selected by a user is a valid channel or has already been set as a virtual channel for another program. When another channel is input according to the guidance of the controller 100, the channel can be set as a virtual channel of a program for which reservation recording has been requested.

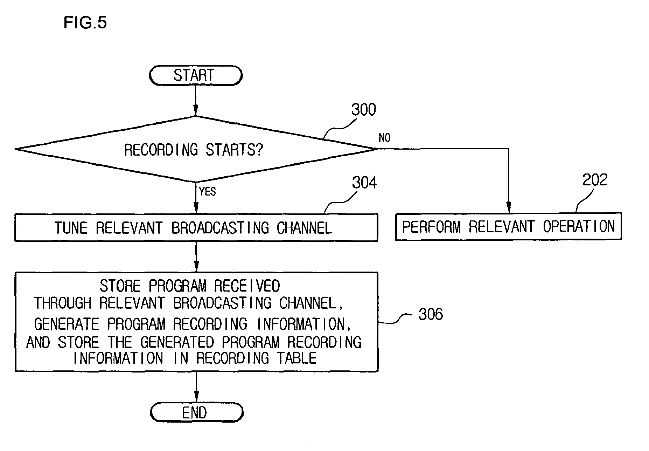

A process for recording a program according to the program reservation information will be described with reference to Fig. 5.

The controller 100 checks whether a current time point counted by an internal timer or a current time point received through broadcasting signals corresponds to a program broadcasting start time point contained in program reservation information (operation 300).

When the current time point corresponds to the program broadcasting start time point contained in program reservation information, the controller 100 controls a tuner 108 to select a broadcasting channel according to the corresponding program broadcasting information. Accordingly, video, audio, and data streams of a corresponding program are received through a broadcasting channel according to the corresponding program broadcasting information (operation 304).

When the video, audio, and data streams are received, the controller 100 checks whether the program is stored as a file in a folder indicated by identification information of the corresponding program and provided to the storage medium 124. When the file for the program is absent, the controller 100 gives episode number information "1" to the program identification information to create identification information of a recorded program, and stores the video and audio streams of the program in a folder of the storage medium 124 that is indicated by the identification information of the corresponding program using the created identification information of the recorded program for a filename.

On the other hand, when the file for the program is present in the folder, the controller 100 gives a value obtained by adding "1" to the number of files stored in the folder, as episode number identification information to create identification information of a recorded program, and stores video and audio streams of the program in a folder of the storage medium 124 that is indicated by the identification information of the corresponding program using the created identification information of the recorded program for a filename.

Also, the controller 100 extracts program guide information corresponding to a broadcasting time and a broadcasting channel, extracts episode number information or broadcasting date information of the received program from the extracted program guide information to create program recording information together with the identification information of the recorded program, and stores the program recording information in a program recoding table.

Accordingly, the storage medium 124 has a folder for each program and stores corresponding programs in respective folders, so that programs corresponding to relevant virtual channels can be easily explored when switching to corresponding virtual channels is performed.

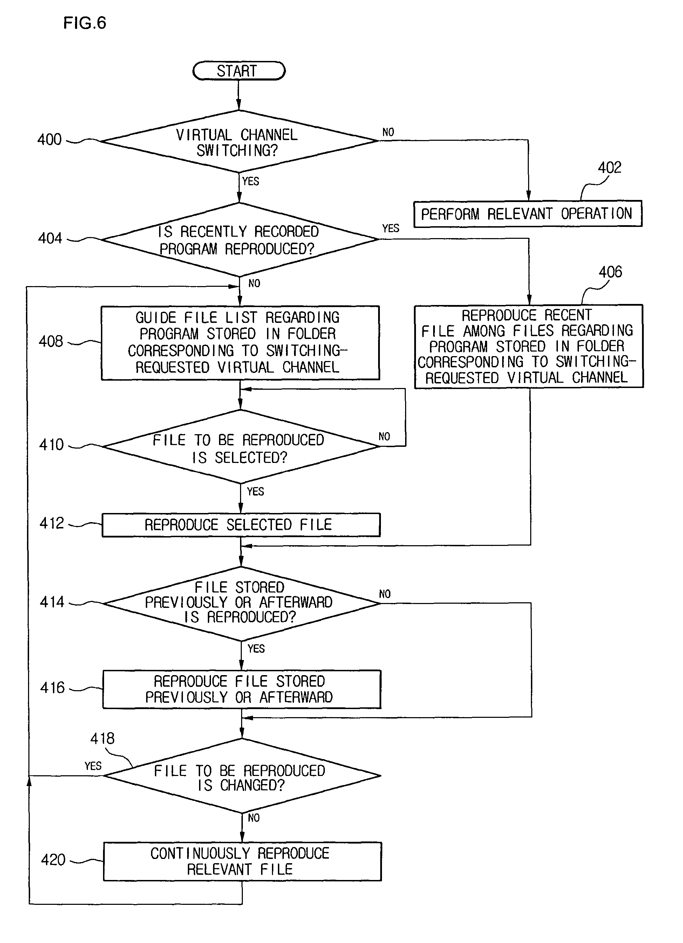

A method for reproducing a stored broadcasting program when switching to a virtual channel is performed will be described with reference to Fig. 6.

When a user gives a command for switching to a virtual channel through a user interface 106 (operation 400), a controller 100 displays a guidance OSD questioning a user regarding whether to reproduce a recently recorded program among programs corresponding to a relevant virtual channel.

When a user selects to reproduce the recently recorded program through a user interface 106 according to the guidance OSD (operation 404), the controller 100 extracts and reproduces a file of a program stored in the folder of the storage medium 124 that corresponds to the switching-requested virtual channel, having a largest identifier of the file or a most recent storage date (operation 406).

On the other hand, when a user does not select to reproduce a recently recorded program, the controller 100 display the guidance OSD for guiding a list regarding files of programs stored in a folder of the storage medium 124 that corresponds to the switching-requested virtual channel (operation 408).

When a user selects one of files contained in the guided list through the user interface 106, the controller 10 reproduces the selected file (operations 410 and 412).

When a user requests reproduction of a file stored before or after a currently reproduced file through the user interface 106, the controller 100 reproduces the file stored before or after the currently reproduced file (operations 414 and 416).

Also, when a user requests change of a file to be reproduced through the user interface 106 during the reproduction of a current file (operation 418), the controller 100 enters the operation 408 to guide the list regarding files of the programs stored in the folder that corresponds to the virtual channel and reproduce a file selected by a user.

Though a process for selecting whether to reproduce a recently recorded file (broadcasting program) when switching to the virtual channel is performed is included in the preferred embodiment of the present invention, it is possible to reproduce the recently recorded program simply by a user's switching to the corresponding virtual channel.

Also, though a user selects a broadcasting program to be recorded among recorded programs according to the embodiment of the present invention, it is possible to reproduce programs stored in a corresponding virtual channel without a user's separate manipulation of sequentially reproducing the programs according to recording dates.

Though the virtual channel is set when recording reservation of a program is performed according to the preferred embodiment of the present invention, the virtual channel may be set or changed after reservation recording of the program is completed.

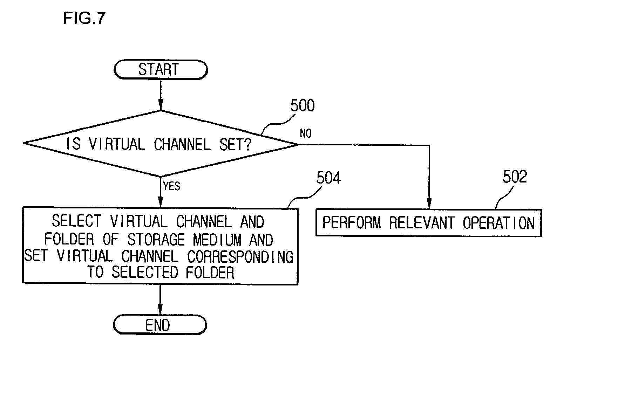

Referring to Fig. 7, when a user requests setting of a virtual channel through a user interface 106 (operation 500), the controller 100 guides a list regarding folders provided to a storage medium 124, and guides a user so that a user may input a virtual channel. Here, the folder is provided for each program or each kind of programs.

When a user selects the folder provided to the storage medium 124 and inputs the virtual channel according to the guidance of the controller 100, the controller 100 sets a virtual channel corresponding to the folder. Virtual channel setting information is registered in program reservation information.

The embodiment of the present invention includes a computer-readable recording medium containing program commands for performing operations on a variety of computers. The computer-readable recording medium may include program commands, data files, data structures, and a combination thereof. The program commands of the computer-readable recording medium may be particularly designed and prepared for the present invention, or known to those skilled in the art of computer software.

The computer-readable recording medium includes hard disks (HDs), magnetic meidia such as floppy disks (FDs) and magnetic tapes, optical media such as compact disc(CD)-read only memories (ROMs) and digital versatile discs (DVDs), magneto-optical media such as floptical disks, ROMs, RAMs, and flash memories. Also, a hardware apparatus particularly configured to store and perform program commands may be provided.

Also, the recording medium may be connected to an optical line, a metal line, or a waveguide transmitting carrier waves containing signals that designate program commands, and data structures. Also, the program commands include not only machine language codes created by a compiler but also high-level language which can be executed by a computer using an interpreter.

As described above, embodiments have an advantage of selectively reproducing some of a plurality of reservation-recorded programs with only simple manipulation of channel switching.

Also, in embodiments, different virtual channels are given to programs consisting of a plurality of episodes broadcasted by one episode every predetermined period, and the recorded programs corresponding to the virtual channels can be reproduced with only a user's request for switching to one of the virtual channels, so that use convenience is maximized.

It will be apparent to those skilled in the art that various modifications and variations can be made in the present invention. Thus, it is intended that the present invention covers the modifications and variations of the embodiments provided they come within the scope of the appended claims.

## Claims

1. A method for reproducing a broadcasting program, the method comprising:
setting a channel for a broadcasting program;
storing the broadcasting program in a storage medium; and
when switching to the set channel is performed, reproducing the stored broadcasting program.

2. The method according to claim 1, comprising storing a plurality of episodes in the same folder of the storage medium when the broadcasting program consists of the plurality of episodes broadcasted every predetermined period.

3. The method according to claim 2, comprising selecting a recently stored episode among the plurality of episodes stored in the same folder and reproducing it when the switching to the set channel is performed.

4. The method according to claim 2, further comprising, when a command for reproducing an episode stored before or after a currently reproduced episode among the plurality of episodes is input, reproducing the episode stored before or after the currently reproduced episode among the plurality of episodes stored in the folder.

5. The method according to claim 1, wherein the channel is a channel selected by a user, or an arbitrarily set channel.

6. The method according to claim 1, comprising reservation-recording the broadcasting program by inputting a broadcasting time and a broadcasting channel.

7. The method according to claim 1, comprising reservation-recording the broadcasting program with reference to an EPG (electronic program guide).

8. The method according to claim 1, wherein the channel is a channel through which a broadcasting program is not transmitted.

9. A method for storing a broadcasting program, the method comprising:
setting recording of the broadcasting program consisting of a plurality of episodes broadcasted in a series;
setting identification information of the broadcasting program; and
storing the broadcasting program in a folder of a storage medium with reference to the identification information.

10. The method according to claim 9, wherein the broadcasting program contains episode identification information representing identification information and episode information of the broadcasting program.

11. A video display apparatus comprising:
a tuner for receiving a broadcasting program;
a broadcasting signal processor for recovering the broadcasting program and separating the recovered broadcasting program into video and audio streams;
video and audio processors for processing the video and audio streams into video and audio signals, respectively;
a display unit for displaying the video signals;
a user interface for receiving a user's command; and
a controller for recording the broadcasting program in a storage medium according to a signal from the user interface, setting a channel for the broadcasting program, and when switching to the set channel is performed, reproducing the broadcasting program associated with the set channel.

12. The apparatus according to claim 11, wherein the storage medium is mounted within the video display apparatus.

13. The apparatus according to claim 11, wherein the storage medium is provided as an external device, and the video display apparatus has a connection terminal for electrically connecting to the storage medium.

14. The apparatus according to claim 11, wherein the controller stores a plurality of episodes in the same folder of the storage medium when the broadcasting program consists of the plurality of episodes broadcasted every predetermined period.

15. The apparatus according to claim 11, wherein the controller selects and reproduces a recently stored episode among the plurality of episodes stored in the same folder when the switching to the set channel is performed.

16. The apparatus according to claim 11, wherein the controller sets identification information of the broadcasting program and stores the broadcasting program broadcasted in a series in the storage medium with reference to the identification information.

17. The apparatus according to claim 16, wherein the broadcasting program has episode identification information representing identification information and episode information of the broadcasting program.
